# EUROPÄISCHE PATENTSCHRIFT

(11) **EP 1 318 035 B1**
(45) Veröffentlichungstag und Bekanntmachung des Hinweises auf die Patenterteilung: **18.06.2008**
(21) Anmeldenummer: 02027027.8
(22) Anmeldetag: 03.12.2002
(51) Int. Cl.: B60G 7/00

(54) **Verfahren zur Herstellung eines Lenkers und Lenker**
Arm and method of manufacturing an arm
Bras et procédé de fabrication d'un bras

(30) Priorität: 05.12.2001 DE 10159524; 26.11.2002 DE 10255049
(43) Veröffentlichungstag der Anmeldung: 11.06.2003
(73) Patentinhaber: Benteler Automobiltechnik GmbH, 33104 Paderborn (DE)
(72) Erfinder: Drabon, Rodscha, 33100 Paderborn (DE); Rose, Leonhard, 38178 Borchen (DE); Korinth, Hendrik, 33106 Paderborn (DE); Neumann, Hans-Jürgen, 33699 Bielefeld (DE)
(74) Vertreter: Griepenstroh, Jörg

(56) Entgegenhaltungen:
- EP-A- 0 684 404
- US-A1- 2001 030 222
- US-B1- 6 298 962
- PATENT ABSTRACTS OF JAPAN vol. 1997, no. 05, 30. Mai 1997 (1997-05-30) & JP 09 011721 A (NIPPON LIGHT METAL CO LTD), 14. Januar 1997 (1997-01-14)
- PATENT ABSTRACTS OF JAPAN vol. 2000, no. 15, 6. April 2001 (2001-04-06) & JP 2000 337416 A (TOYO TIRE & RUBBER CO LTD), 5. Dezember 2000 (2000-12-05)

## Beschreibung

Die Erfindung betrifft einerseits ein Verfahren zur Herstellung eines Lenkers, insbesondere für ein Fahrwerk eines Kraftfahrzeugs, gemäß den Merkmalen in den Oberbegriffen der Patentansprüche 1 und 2.

Andererseits richtet sich die Erfindung auf einen Lenker gemäß den Merkmalen im Oberbegriff des Patentanspruchs 5.

Die DE 199 11 121 A1 offenbart einen Lenker für das Fahrwerk eines Kraftfahrzeugs, der sich aus einem Verbindungsrohr aus einer Aluminiumlegierung und aus endseitigen Lageraugen zusammensetzt, welche jeweils eine Hülse aus einer Aluminiumlegierung mit stutzenartigem Ansatz und ein in die Hülse eingebettetes Lagerelement aufweisen.

Die Lagerelemente bestehen aus Metallbuchsen mit Gummielementen, welche in die Hülsen eingepresst werden. Mit dem Einpressen ist ein vergleichsweise hoher zeitlicher und apparativer Aufwand verbunden. Die Metallbuchsen müssen einwandfrei fixiert sein, da sonst kein Fahrwerkteil funktionssicher im Einsatz wäre.

Im bekannten Fall der DE 199 11 121 A1werden die Lagerelemente gesondert gefertigt. Ein vorgefertigtes Lagerelement enthält mindestens eine Innenbuchse, die von wenigstens einer Gummilage umschlossen ist. Es ist auch denkbar, dass sich in einem solchen Lagerelement mehrere Buchsen mit Gummizwischenlagen befinden. Eine Außenbuchse aus Metall oder Kunststoff umschließt dann die inneren Lagen. Das Lagerelement wird nach seiner Herstellung in einem eigenen Arbeitsschritt oder beim Einpressvorgang in die Hülse kalibriert. Die Innenfläche der Aufnahmeöffnung in der Hülse muss ebenso wie die Außenbuchse des Lagerelements genaue Toleranzen aufweisen, damit anschließend das Lagerelement in die Hülse eingepresst werden kann und um bestimmte Auspresskräfte zu realisieren. Es muss eine erforderliche Auspresskraft definiert und eingehalten werden, um die sichere Funktion des Presssitzes unter allen auftretenden Kräften und Umweltbedingungen über die Lebensdauer zu gewährleisten. Der konstruktive Aufwand ist bei Alu-Lenkern höher als bei Stahlbauteilen. Das Einpressen bedeutet einen zusätzlichen separaten Arbeitsvorgang. Zudem muss gewährleistet sein, dass unter allen Umweltbedingungen ein ausreichender Korrosionsschutz in dem Presssitz vorhanden ist.

Auch wird durch die Außenbuchse eines Lagerelements ein Lagerauge schwerer. Dadurch kommt es zu einer Erhöhung der ungefederten Massen in einem Achssystem. Dieses kann zu Einbußen im Fahrkomfort eines Kraftfahrzeugs führen.

Die Hülsen besitzen stutzenartige Ansätze aus Vollmaterial. Diese greifen in das Verbindungsrohr und werden mit diesem gezielt durch Reib-Rühr-Schweißen (Friction Stir Welding) verbunden.

Das Reib-Rühr-Schweißen ist eine an runden Teilen vergleichsweise aufwändige Schweißtechnik. Es hat außerdem den Mangel, dass am Ende des Schweißvorgangs bei der Entfernung der bolzenförmigen Sonde immer ein Loch verbleibt. Dieses Loch ist dann beim Einsatz des in Rede stehenden Lenkers in einem Fahrwerk einer erhöhten korrosiven Beanspruchung und einer erheblichen Kerbwirkung ausgesetzt, welche sich letztlich auf die Standzeit des Lenkers negativ bemerkbar macht.

Zum Fügen eines Rohrs an eine stumpfe Fläche eines Quaders werden im bekannten Falle weitere Schweißverfahren genannt, u.a. das Reibschweißen. Dieses wird jedoch nicht in Verbindung mit Rohransätzen erwähnt. Die beschriebene Verbindung eines dünnwandigen Rohrs mit einer großvolumigen Quaderfläche bringt erhebliche Probleme in der Verbindungstechnik und eine erheblich größere Kerbwirkung am Bauteil mit sich. Damit ist die Lebensdauer einer solchen Verbindung begrenzt und diese nur bedingt in der Fahrwerktechnik geeignet. Außerdem ist sie mit einem höheren Bauteilgewicht verbunden.

Der Erfindung liegt - ausgehend vom Stand der Technik - die Aufgabe zugrunde, ein Verfahren zur Herstellung eines Lenkers und einen Lenker zu schaffen, bei welchen bei verringertem Gewicht wirtschaflicher in Serie gefertigt werden kann.

Was den verfahrensmäßigen Teil der Lösung dieser Aufgabe anlangt, so besteht eine erste Variante in den kennzeichnenden Merkmalen des Patentanspruchs 1.

Im Rahmen dieses Verfahrens wird besonders berücksichtigt, dass der herzustellende Lenker mit endseitigen Lageraugen einen ausgesprochenen Massenartikel darstellt. Auf einen solchen Massenartikel sind dann auch die Fertigungsschritte optimiert abgestimmt. Demgemäß wird zunächst einerseits ein Rohrstrang auf die Länge eines Verbindungsrohrs zuzüglich Aufmaß für den Fügeprozess abgeteilt. Der Rohrstrang kann aus einer Leichtmetalllegierung sowie Kunststoffen, insbesondere im Strangpressverfahren, hergestellt werden.

Denkbar ist es aber auch, dass der Rohrstrang aus gekrümmten und längsnahtgeschweißten Platinen gefertigt sein kann. Dazu dient insbesondere das Laser- oder Hochfrequenzschweißen. Insbesondere wird der Rohrstrang jedoch aus einer Aluminiumlegierung gefertigt. Andererseits wird ein Strang- oder Fließpressprofil mit der Querschnittskonfiguration der einen stutzenartigen Ansatz aufweisenden Hülse gefertigt. Dieses Strang- oder Fließpressprofil wird danach auf die axiale Höhe der Hülsen mit Ansatz abgeteilt. Dieses Abteilen kann beispielsweise durch Sägen erfolgen. Auch das Strang- oder Fließpressprofil zur Fertigung der Hülsen kann aus beliebigen Leichtmetalllegierungen oder Kunststoffen, insbesondere jedoch aber aus einer Aluminiumlegierung, bestehen. Der Vorteil von Aluminiumlegierungen ist, dass keine thermischen Nachbehandlungen notwendig sind.

Aufgrund dieser Fertigungsschritte liegen insgesamt drei unabhängige Bauteile vor, ein Verbindungsrohr und zwei Hülsenrohbauteile.

In die abgeteilten Hülsenrohbauteile werden Lagerelemente in Gestalt von Gummi-Metall-Elementen gezielt einvulkanisiert. Hiermit ist der Vorteil verbunden, dass das Gewicht eines Lagerauges und damit auch eines Lenkers deutlich verringert werden kann, da keine zusätzliche Buchse wie beim Einpressen der bekannten Lagerelemente erforderlich ist. Auch weist die Erfindung den Vorteil auf, dass sowohl die Hülsen als auch die Gummi-Metall-Lager beliebige Querschnitte aufweisen können. Es können runde oder mehreckige Querschnitte zum Einsatz gelangen. Ferner ist die Größe der Hülsen variierbar. Die Achsen der Gummi-Metall-Elemente in den Hülsen können parallel zueinander oder in einem Winkel verlaufen. Nach dem Einvulkanisieren des Gummi-Metall-Lagers in einen Hülsenrohbauteil kann diese Montageeinheit bei Bedarf kalibriert werden. Das Einvulkanisieren ermöglicht bei optimaler Lagefixierung die Aufnahme höherer Axialkräfte.

Nach dem Einvulkanisieren werden bevorzugt zwei Hülsenrohbauteile und ein Verbindungsrohr in einer Reibschweißmaschine eingespannt. Danach werden die stutzenartigen Ansätze an den Hülsenrohbauteilen zu Rohransätzen zerspant. Dies kann z.B. durch Drehen oder Fräsen erfolgen.

Durch die Fixierung von Verbindungsrohr und Lageraugen per Reibschweißen gelangt in die mit den einvulkanisierten Gummi-Metall-Elementen versehenen Hülsenrohbauteile ein nur geringer Wärmeeintrag. Somit werden die Gummi-Metall-Elemente nicht geschädigt. Es wird jedoch eine homogene feinkörnige Fügeverbindung erzielt. Die Gummi-Metall-Elemente werden jetzt nicht mehr eingepresst, da sie direkt in die Hülsenrohbauteile einvulkanisiert sind. Dadurch entfällt auch das genaue Bearbeiten der Innenflächen der Hülsenrohbauteile sowie der Außenfläche der Buchsen von gesondert gefertigten Gummi-Metall-Lagern, die für das Einpressen genaue Toleranzen aufweisen müssen. Folglich wird mit dem Wegfall der Buchsen nicht nur Gewicht, sondern durch den Wegfall von Arbeitsschritten zusätzlich ein Teil der Herstellungskosten eingespart.

Durch das kalibrierende axiale Kaltstauchen der gefügten Bauteile kann eine exakt definierte Abstandstoleranz der Achsen der Gummi-Metall-Elemente gewährleistet werden.

Nach dem kalibrierenden Kaltstauchen der gefügten Bauteile werden die Fügestellen umfangsseitig geglättet. Dies kann z.B. spanend oder rollend durchgeführt werden.

Der besondere Vorteil der Bearbeitung und Verschweißung einschließlich der Kalibrierung in einer einzigen Einspannung führt zu einem präzise gefertigten Bauteil eines Fahrwerks für ein Kraftfahrzeug, das auch in der Massenproduktion stets genau reproduzierbar ist. Fluchtungsfehler werden ausgeschlossen.

Die Variante zur Herstellung eines Lenkers gemäß den Merkmalen des Patentanspruchs 2 sieht vor, dass der Rohransatz an einer Hülse außerhalb oder innerhalb einer Reibschweißmaschine hergestellt werden kann. Des Weiteren erfolgt bei dieser Ausführungsform das Einvulkanisieren der Gummi-Metall-Elemente außerhalb der Reibschweißmaschine. Der Rohransatz kann vor oder nach dem Vulkanisieren hergestellt werden. Ansonsten gelten alle beschriebenen Eigenschaften, wie sie zu dem Verfahren des Patentanspruchs 1 angeführt worden sind.

Eine besonders vorteilhafte Ausführungsform einer bei dem Verbindungsrohr und bei den Hülsen zur Anwendung gelangenden Aluminiumlegierung wird in den Merkmalen des Patentanspruchs 3 gesehen.

Bevorzugt gelangt eine Aluminiumlegierung entsprechend den Merkmalen des Patentanspruchs 4 zum Einsatz.

Ein gemäß den Verfahrensschritten der Patentansprüche 1 bis 4 hergestellter Lenker, insbesondere für das Fahrwerk eines Kraftfahrzeugs, bildet Bestandteil des Patentanspruchs 5. Auch bei dem Lenker ist es vorstellbar, dass das Verbindungsrohr aus einer beliebigen Leichtmetalllegierung oder aus Kunststoff besteht. Vorzugsweise wird es jedoch aus einer Aluminiumlegierung gebildet. Es kann stranggepresst sein. Vorstellbar ist aber auch die Fertigung aus einer Platine, die rohrförmig gekrümmt und dann längsnahtgeschweißt wird. Die Hülsen können ebenfalls aus beliebigen Leichtmetalllegierungen sowie Kunststoffen bestehen. Bevorzugt sind sie jedoch aus einer Aluminiumlegierung gefertigt.

Die Erfindung ist nachfolgend anhand von in den Zeichnungen dargestellten Ausführungsbeispielen näher erläutert. Es zeigen:
- Figur 1: in der Perspektive einen Lenker für ein Fahrwerk eines Kraftfahrzeugs;
- Figur 2: den Lenker der Figur 1 in Explosionsdarstellung;
- Figur 3: den Lenker der Figur 1 in Explosionsdarstellung gemäß einer weiteren Ausführungsform;
- Figur 4: den Lenker gemäß Figur 1 in Explosionsdarstellung gemäß einer dritten Ausführungsform;
- Figur 5: ein Strangpressprofil zur Herstellung von Hülsen in der Perspektive;
- Figur 6: ein Lagerauge des Lenkers der Figur 1 in der Draufsicht;
- Figur 7: einen vertikalen Längsschnitt durch das Lagerauge der Figur 6 und
- Figur 8: in der Perspektive ein Lagerauge eines Lenkers gemäß einer weiteren Ausführungsform.

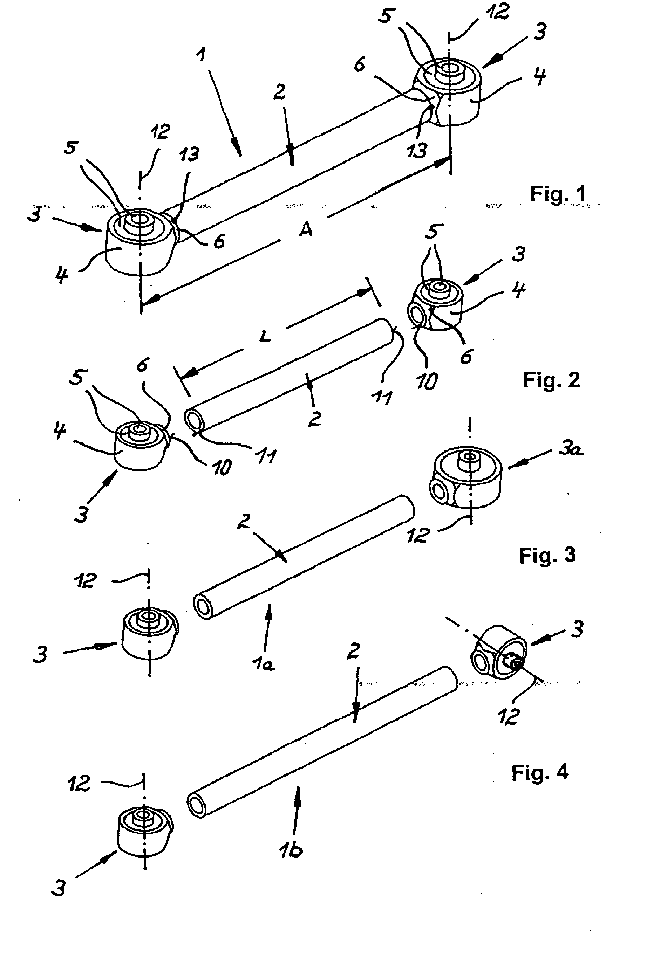

In der Figur 1 ist mit 1 ein Lenker bezeichnet, wie er beispielsweise im Bereich einer Radaufhängung am Fahrwerk eines Personenkraftwagens zum Einsatz gelangen kann.

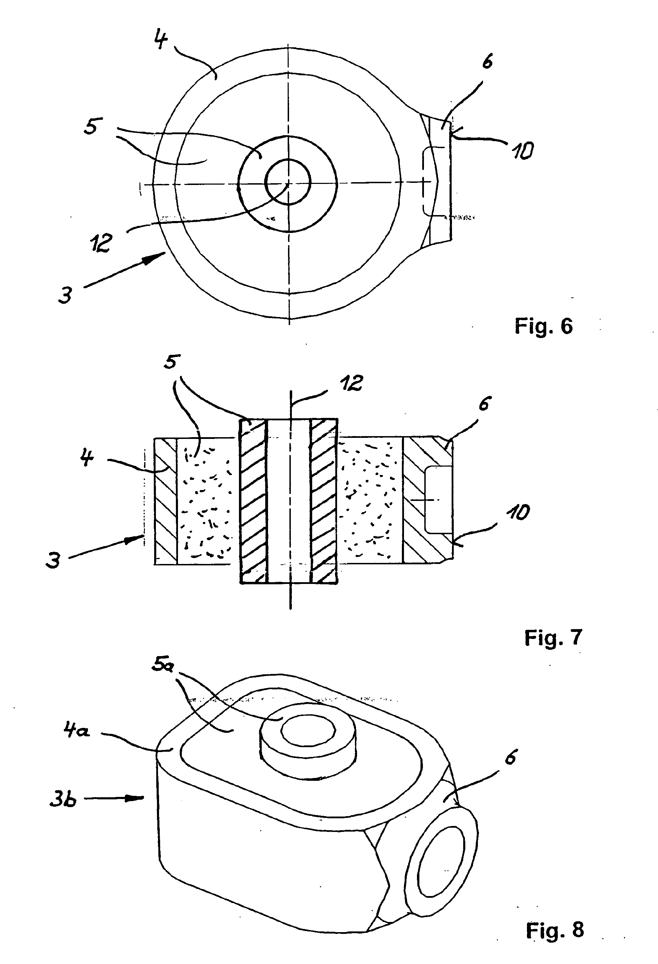

Der Lenker 1 weist ein sich geradlinig erstreckendes Verbindungsrohr 2 aus einer Aluminiumlegierung auf. Endseitig des Verbindungsrohrs 2 befinden sich mit diesem durch Reibschweißen gefügte Lageraugen 3. Die Lageraugen 3 setzen sich jeweils aus einer einen Rohransatz 6 aufweisenden Hülse 4 aus einer Aluminiumlegierung und aus einem in die Hülse 4 einvulkanisierten Gummi-Metall-Element 5 zusammen (siehe auch Figuren 6 und 7).

Die zur Fertigung des Verbindungsrohrs 2 und der Hülsen 4 verwendete Aluminiumlegierung ist, in Gewichtsprozenten ausgedrückt, wie folgt zusammengesetzt: Si 0,69, Mn 0,33, Mg 0,26, Fe 0,20, Rest A1 sowie erschmelzungsbedingte Verunreinigungen.

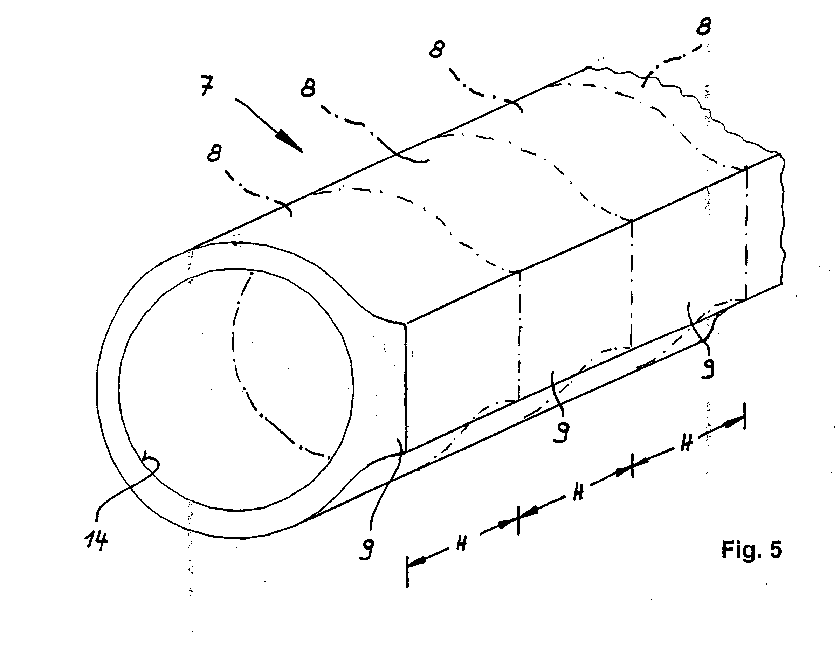

Bei der Herstellung des Lenkers 1 der Figur 1 wird einerseits ein Rohrstrang aus der vorstehend beschriebenen Aluminiumlegierung stranggepresst und anschließend auf die Länge L eines Verbindungsrohrs 2 abgeteilt (Figur 2). Andererseits wird gemäß der Darstellung der Figur 5 ein Strangpressprofil 7 aus der vorstehend beschriebenen Aluminiumlegierung gefertigt, welches die Querschnittskonfiguration der Hülsen 4 im Rohzustand aufweist. Dieses Strangpressprofil 7 wird dann anschließend gemäß den strichpunktierten Linienführungen in Figur 5 auf die axiale Höhe H der Hülsen 4 abgeteilt, so dass sich Hülsenrohbauteile 8 ergeben.

Nach dem Abteilen werden in die Löcher 14 der Hülsenrohbauteile 8 die Gummi-Metall-Elemente 5 gemäß den Figuren 1, 6 und 7 einvulkanisiert.

Im Anschluss daran werden zwei mit den einvulkanisierten Gummi-Metall-Elementen 5 versehene Hülsenrohbauteile 8 und ein Verbindungsrohr 1 in eine nicht näher dargestellte Reibschweißmaschine eingespannt. In dieser Einspannung werden zunächst aus den stutzenartigen Ansätzen 9 der Hülsenrohbauteile 8 gemäß Figur 5 die Rohransätze 6 gemäß insbesondere den Figuren 6 und 7 spanend gefertigt, so dass die Lageraugen 3 gebildet werden.

Im Anschluss daran werden die kreisringförmigen Stirnflächen 10 der Rohransätze 6 der Hülsen 4 mit den ebenfalls kreisringförmigen Stirnseiten 11 des Verbindungsrohrs 2 durch Reibschweißen gefügt. Die Außendurchmesser der Stirnflächen 10 der Rohransätze 6 und der Stirnseiten 11 des Verbindungsrohrs 2 sind genau aufeinander abgestimmt.

Nach dem Fügen der Lageraugen 3 mit dem Verbindungsrohr 2 werden noch in derselben Einspannung die gefügten Bauteile 2, 3 einer kalibrierenden axialen Kaltstauchung unterworfen, damit der exakte Abstand A der Achsen 12 der Gummi-Metall-Elemente 5 erreicht wird (Figur 1).

Nach dem Kaltstauchen werden ebenfalls in der Einspannung die Fügestellen 13 einer umfangsseitigen Glättung unterworfen, die durch spanende Bearbeitung oder Verrollen geschehen kann.

Die Figur 3 zeigt in Explosionsdarstellung einen Lenker 1a mit unterschiedlich groß konfigurierten Lageraugen 3, 3a, wobei aber die Achsen 12 der Lageraugen 3, 3a parallel zueinander verlaufen. Das Verbindungsrohr 2 entspricht demjenigen der Figuren 1 und 2. Auch die Herstellung und das Fügen wird wie bei der Ausführungsform der Figuren 1 und 2 vorgenommen.

In der Figur 4 ist eine Ausführungsform eines Lenkers 1b in Explosionsdarstellung veranschaulicht, bei welcher die Achsen 12 gleich großer Lageraugen 3 um 90° zueinander verdreht sind. Das Verbindungsrohr 2 entspricht ebenfalls demjenigen der Figuren 1 und 2, so dass auch die Herstellung und das Fügen wie bei der Ausführungsform der Figuren 1 und 2 vorgenommen wird.

In der Figur 8 ist in perspektivischer Darstellung ein Lagerauge 3b veranschaulicht, das im Gegensatz zu den Lageraugen 3, 3a der Figuren 1 bis 4, 6 und 7 oval bzw. angenähert rechteckig ausgebildet ist. Der Vorteil liegt darin, alle beliebigen Querschnitte im Profil herstellen zu können und diese anschließend zu vulkanisieren. Damit können diverse Gummisteifigkeiten erzeugt werden. Das Hülsenrohbauteil dieses Lagerauges 3b wird ebenfalls von einem entsprechend konfigurierten Strangpressprofil abgeteilt und anschließend mit einem Gummi-Metall-Element 5a durch Einvulkanisieren versehen. Danach erfolgen die weiteren Fertigungsschritte wie vorstehend beschrieben, so dass Hülsen 4a mit Rohransätzen 6 entstehen. Eine nochmalige Erläuterung ist daher entbehrlich.

Statt der vorstehend beschriebenen Fertigungsschritte kann es auch denkbar sein, dass nach dem Abteilen der Hülsenrohbauteile 8 von einem im Querschnitt entsprechend konfigurierten Strangpressprofil 7 diese zunächst in einem gesonderten Fertigungsgang mit den Rohransätzen 6 versehen und vorher oder nachher die Gummi-Metall-Elemente 5 in die Hülsenrohbauteile 8 oder in die Hülsen 4 einvulkanisiert werden.

Danach erfolgt dann, wie beschrieben, das Fügen der fertigen Lageraugen 3, 3a, 3b mit einem Verbindungsrohr 2.

### Bezugszeichenaufstellung

- 1 -: Lenker
- 1a -: Lenker
- 1b -: Lenker
- 2 -: Verbindungsrohr v. 1, 1a, 1b
- 3 -: Lageraugen v. 1, 1a, 1b
- 3a -: Lagerauge
- 3b -: Lagerauge
- 4 -: Hülse v. 3, 3a
- 4a -: Hülse v. 3b
- 5 -: Gummi-Metall-Element v. 3, 3a
- 5a -: Gummi-Metall-Element v. 3b
- 6 -: Rohransatz v. 4, 4a
- 7 -: Strangpressprofil
- 8 -: Hülsenrohbauteile
- 9 -: stutzenartige Ansätze v. 8
- 10 -: Stirnflächen v. 6
- 11 -: Stirnseiten v. 2
- 12 -: Achsen v. 5
- 13 -: Fügestellen
- 14 -: Bohrungen in 8

- A -: Abstand
- L -: Länge v. 2 plus Aufmaß

## Patentansprüche

1. Verfahren zur Herstellung eines Lenkers (1, 1a, 1b), insbesondere für ein Fahrwerk eines Kraftfahrzeugs, der zwei an die Enden eines Verbindungsrohrs (2) angesetzte Lageraugen (3, 3a, 3b) umfasst, welche jeweils aus einer Hülse (4, 4a) mit stutzenartigem Ansatz (6, 9) und einem in die Hülsen (4, 4a) eingebetteten Lagerelement (5) bestehen, wobei zunächst einerseits ein Rohrstrang mit kreisrundem Querschnitt auf die Länge plus Aufmaß (L) eines Verbindungsrohrs (2) abgeteilt und andererseits ein Strang- oder Fließpressprofil (7) mit der Querschnittskonfiguration der Hülsen (4, 4a) gefertigt und anschließend auf die axiale Höhe (H) der Hülsen (4, 4a) abgeteilt werden **dadurch gekennzeichnet, daß**, die Lagerelemente (5) in Gestalt von Gummi-Metall-Elementen in die abgeteilten Hülsenrohbauteile (8) einvulkanisiert und danach sowohl die Hülsenrohbauteile (8) als auch das Verbindungsrohr (2) in einer Reibschweißmaschine axial verlagerbar eingespannt werden, wobei in dieser Einspannung zunächst aus den stutzenartigen Ansätzen (9) an den Hülsenrohbauteilen (8) Rohransätze (6) spanend gefertigt und die Rohransätze (6) dann über ihre kreisringförmigen Stirnflächen (10) durch Reibschweißen mit den kreisringförmigen Stirnseiten (11) des Verbindungsrohrs (2) gefügt werden, und dass in dieser Einspannung nach dem kalibrierenden axialen Kaltstauchen der gefügten Bauteile (2, 3, 3a, 3b) die Fügestellen (13) umfangsseitig geglättet werden.

2. Verfahren zur Herstellung eines Lenkers (1, 1a, 1b), insbesondere für ein Fahrwerk eines Kraftfahrzeugs, der zwei an die Enden eines Verbindungsrohrs (2) angesetzte Lageraugen (3, 3a, 3b) umfasst, welche jeweils aus einer Hülse (4, 4a) mit einem stutzenartigen Ansatz (6, 9) und einem in die Hülse (4, 4a) eingebetteten Lagerelement (5) bestehen, **dadurch gekennzeichnet, dass** zunächst einerseits ein Rohrstrang mit kreisrundem Querschnitt auf die Länge (L) plus Aufmaß eines Verbindungsrohrs (2) abgeteilt und andererseits ein Strang- oder Fließpressprofil (7) mit der Querschnittskonfiguration der Hülsen (4, 4a) gefertigt und anschließend auf die axiale Höhe (H) der Hülsen (4, 4a) abgeteilt werden, worauf aus den stutzenförmigen Ansätzen (9) der abgeteilten Hülsenrohbauteile (8) Rohransätze (6) spanend gefertigt und die Lagerelemente (5) in Gestalt von Gummi-Metall-Elementen in die Hülsen (4, 4a) einvulkanisiert werden, und dass dann sowohl die derart gebildeten Lageraugen (3, 3a, 3b) als auch das Verbindungsrohr (2) in einer Reibschweißmaschine axial verlagerbar eingespannt und die Rohransätze (6) der Hülsen (4) über ihre kreisringförmigen Stirnflächen (10) durch Reibschweißen mit den kreisringförmigen Stirnseiten (11) des Verbindungsrohrs (2) gefügt werden, wobei in dieser Einspannung nach einem kalibrierenden Kaltstauchen der gefügten Bauteile (2, 3, 3a, 3b) die Fügestellen (13) umfangsseitig geglättet werden.

3. Verfahren nach Patentanspruch 1 oder 2, **dadurch gekennzeichnet, dass** bei dem Rohrstrang und/oder dem Strang-/Fließpressprofil (7) eine Aluminiumlegierung zur Anwendung gelangt, die, in Gewichtsprozenten ausgedrückt, wie folgt zusammengesetzt ist:
Si 0,59 - 0,81
Mn 0,28 - 0,38
Mg, 0,22-0,30
Fe 0,16-0,22
Rest Al sowie erschmelzungsbedingte Verunreinigungen.

4. Verfahren nach einem der Patentansprüch 1 bis 3, **dadurch gekennzeichnet, dass** bei dem Rohrstrang und/oder dem Strang/Fließpressprofil (7) eine Aluminiumlegierung zur Anwendung gelangt, die, in Gewichtsprozenten ausgedrückt, wir folgt zusammengesetzt ist:
Si 0,69
Mn 0,33
Mg 0,26
Fe 0,20
Rest Al sowie erschmelzungsbedingte Verunreinigungen.

5. Lenker, insbesondere für das Fahrwerk eines Kraftfahrzeugs, gefertigt nach einem der Patentansprüche 1 bis 4, **dadurch gekennzeichnet, dass** an die kreisringförmigen Stirnseiten (11) eines insbesondere aus einer Aluminiumlegierung stranggepressten Verbindungsrohrs (2) die kreisringförmigen Stirnflächen (10) von Rohransätzen (6) an mit einvulkanisierten Gummi-Metall-Elementen (5) versehenen Hülsen (4, 4a) aus insbesondere einer Aluminiumlegierung als Bestandteile von Lageraugen (3, 3a, 3b) durch Reibschweißen gefügt sind.

## Claims

1. Method for the production of a link (1, 1a, 1b), in particular for a chassis of a motor vehicle, which comprises two bearing lugs (3, 3a, 3b) which are attached to the ends of a connecting tube (2) and which consist in each case of a sleeve (4, 4a) with a nipple-like extension (6, 9) and of a bearing element (5) embedded into the sleeves (4, 4a), first, on the one hand, a tube section of circular cross section being divided off to the length, plus oversize (L), of a connecting tube (2), and, on the other hand, an extruded profile (7) with the cross-sectional configuration of the sleeves (4, 4a) being manufactured and subsequently being divided off to the axial height (H) of the sleeves (4, 4a), **characterized in that** the bearing elements (5) are vulcanized in the form of rubber/metal elements into the divided-off rough sleeve components (8), and thereafter both the rough sleeve components (8) and the connecting tube (2) are chucked axially displaceably in a friction-welding machine, in this chucking first tube extensions (6) being manufactured by cutting from the nipple-like extensions (9) on the rough sleeve components (8), and the tube extensions (6) then being joined by friction welding, via their annular end faces (10), to the annular end faces (11) of the connecting tube (2), and **in that**, in this chucking, after the calibrating axial cold upsetting of the joined components (2, 3, 3a, 3b), the joins (13) are smoothed circumferentially.

2. Method for the production of a link (1, 1a, 1b), in particular for a chassis of a motor vehicle, which comprises two bearing lugs (3, 3a, 3b) which are attached to the ends of a connecting tube (2) and which consist in each case of a sleeve (4, 4a) with a nipple-like extension (6, 9) and of a bearing element (5) embedded into the sleeve (4, 4a), **characterized in that**, first, on the one hand, a tube section of circular cross section is divided off to the length (L), plus oversize, of a connecting tube (2), and, on the other hand, an extruded profile (7) with the cross-sectional configuration of the sleeves (4, 4a) is manufactured and subsequently divided off to the axial height (H) of the sleeves (4, 4a), whereupon tube extensions (6) are manufactured by cutting from the nipple-like extensions (9) of the divided-off rough sleeve components (8), and the bearing elements (5) are vulcanized in the form of rubber/metal elements into the sleeves (4, 4a), and **in that**, then, both the bearing lugs (3, 3a, 3b) formed in this way and the connecting tube (2) are chucked axially displaceably in a friction-welding machine, and the tube extensions (6) of the sleeves (4) are joined by friction welding, via their annular end faces (10), to the annular end faces (11) of the connecting tube (2), in this chucking, after a calibrating cold upsetting of the joined components (2, 3, 3a, 3b), the joins (13) being smoothed circumferentially.

3. Method according to Patent Claim 1 or 2, **characterized in that**, in the tube section and/or the extruded profile (7), an aluminium alloy is used, which, expressed in percentages by weight, is composed as follows:
Si 0.59 - 0.81
Mn 0.28 - 0.38
Mg 0.22 - 0.30
Fe 0.16 - 0.22
the remainder Al and melt-induced impurities.

4. Method according to one of Patent Claims 1 to 3, **characterized in that**, in the tube section and/or the extruded profile (7), an aluminium alloy is used which, expressed in percentages by weight, is composed as follows:
Si 0.69
Mn 0.33
Mg 0.26
Fe 0.20
the remainder Al and melt-induced impurities.

5. Link, in particular for the chassis of a motor vehicle, manufactured according to one of Patent Claims 1 to 4, **characterized in that** the annular end faces (11) of a connecting tube (2) extruded, in particular, from an aluminium alloy have joined to them the annular end faces (10) of tube extensions (6) on sleeves (4, 4a) provided with vulcanized-in rubber/metal elements (5) and consisting, in particular, of an aluminium alloy, as components of bearing lugs (3, 3a, 3b), by friction welding.

## Revendications

1. Procédé pour la fabrication d'un bras (1, 1a, 1b), en particulier pour un châssis de véhicule automobile, qui comporte deux oeillets de logement (3, 3a, 3b) appliqués sur les extrémités d'un tube de raccordement (2), lesquels oeillets de logement consistent respectivement en une douille (4, 4a) avec un appendice en forme de tubulure (6, 9) et un élément de logement (5) logé dans les douilles (4, 4a), divisant tout d'abord, d'une part, un tronçon tubulaire avec une section transversale ronde circulaire sur la longueur plus sur-dimension (L) d'un tube de liaison (2) et, d'autre part, un profilé extrudé, fabriqué avec la configuration en coupe transversale des douilles (4, 4a) et consécutivement séparé sur la hauteur axiale (H) des douilles (4, 4a), **caractérisé en ce que** les éléments de logement (5) sont vulcanisés sous forme d'éléments métal-caoutchouc dans les modules bruts de douilles séparées (8) et, ensuite, aussi bien les modules bruts de douilles (8) que le tube de liaison (2) sont encastrés de façon déplaçable axialement dans une machine de soudure par friction, moyennant quoi, dans ce montage, des appendices tubulaires (6) sur les modules bruts de douille (8) sont d'abord fabriqués par enlèvement de copeaux à partir des appendices en forme de tubulures (9) et les appendices tubulaires (6) sont ensuite assemblés sur leur face frontale circulaire (10) par soudage par friction avec les côtés frontaux circulaires (11) du tube de liaison (2), et **en ce que**, dans ce montage, après le refoulement à froid axial calibrant des éléments assemblés (2, 3, 3a, 3b), les zones de jointure (13) sont lissées sur la périphérie.

2. Procédé pour la fabrication d'un bras (1, 1a, 1b), en particulier pour un châssis d'un véhicule automobile, qui comprend deux oeillets de montage (3, 3a, 3b) appliqués sur les extrémités d'un tube de liaison (2), oeillets de logement qui consistent respectivement en une douille (4, 4a) avec un appendice tubulaire (6, 9) et un élément de logement (5) encastré dans la douille (4, 4a), **caractérisé en ce que** tout d'abord, d'une part, un tronçon tubulaire de section transversale ronde circulaire est divisé sur la longueur (L) plus sur-dimension d'un tube de liaison (2) et, d'autre part, un profilé extrudé (7) est fabriqué avec la configuration en coupe transversale des douilles (4, 4a) et, consécutivement, sont divisés sur la hauteur axiale (H) des douilles (4, 4a), après quoi, à partir des appendices tubulaires (9), des modules bruts de douilles séparées (8) sont fabriqués par enlèvement de copeaux des appendices tubulaires (6) et les éléments de logement (5) sous forme d'éléments caoutchouc-métal sont vulcanisés dans les douilles (4, 4a), et **en ce que**, ensuite, aussi bien les oeillets de logement ainsi formé (3, 3a, 3b) que le tube de liaison (2) sont montés de façon déplaçable axialement dans une machine de soudage par friction et les appendices tubulaires (6) des douilles (4) sont assemblés par leurs faces frontales circulaires (10) par soudage par friction avec les côtés frontaux circulaires (11) du tube de liaison (2), moyennant quoi, dans ce montage, après un refoulement à froid calibrant des modules assemblés (2, 3, 3a, 3b), les zones de jointure (13) sont lissées sur la périphérie.

3. Procédé selon la revendication 1 ou la revendication 2, **caractérisé en ce que**, pour le tronçon tubulaire et/ou le profilé extrudé (7), on fait appel à un alliage en aluminium qui, en pourcentage en poids, est composé comme suit :
Si 0,59-0,81
Mn 0,28-0,38
Mg 0,22-0,30
Fe 0,16-0,22
Reste Al ainsi que des impuretés résultant du bain de fusion.

4. Procédé selon l'une des revendications 1 à 3, **caractérisé en ce que**, pour le tronçon tubulaire et/ou le profilé extrudé (7), on fait appel à un alliage d'aluminium qui, exprimé en pourcentage en poids, est ainsi composé :
Si 0,69
Mn 0,33
Mg 0,26
Fe 0,20
Reste Al ainsi que des impuretés résultant du bain de fusion.

5. Bras, en particulier pour le châssis d'un véhicule automobile, fabriqué selon l'une des revendications 1 à 4, **caractérisé en ce que**, sur les côtés frontaux circulaires (11) d'un tube de liaison (2) extrudé, en particulier à partir d'un alliage d'aluminium, les faces frontales circulaires (10) des appendices tubulaires (6) sur les douilles (4, 4a) munies d'éléments métal-caoutchouc vulcanisés (5) sont assemblées, en particulier à partir d'un alliage d'aluminium en tant que composant des oeillets de logement (3, 3a, 3b) par soudage par friction.
